Europäisches Patentamt

European Patent Office

Office européen des brevets

(11) Numéro de publication: **0 409 753 A1**

# DEMANDE DE BREVET EUROPEEN

(21) Numéro de dépôt: 90420348.6

(22) Date de dépôt: **19.07.90**

(51) Int. Cl.⁵: **B25B 27/02**, B23D 29/00

(30) Priorité: 21.07.89 FR 8910112

(43) Date de publication de la demande:
**23.01.91 Bulletin 91/04**

(84) Etats contractants désignés:
**DE ES GB NL**

(71) Demandeur: **HYDR'AM**
**Allée des Jonquilles**
**F-69330 Jonage(FR)**

(72) Inventeur: **Armand, Michel**
**Allée des Jonquilles**
**F-69330 Jonage(FR)**

(74) Mandataire: **Laurent, Michel et al**
**Cabinet Laurent et Charras 20, rue Louis**
**Chirpaz B.P. 32**
**F-69131 Ecully Cédex(FR)**

(54) **Ecarteur perfectionné à commande hydraulique.**

(57) Ecarteur à commande hydraulique, comprenant deux bras (5,6) écarteurs, articulés sur une chape, dont l'ouverture est commandée par un vérin, et dont les deux extrémités libres reçoivent chacune un embout (12, 13), respectivement d'appui (13) et de découpe (12).

Selon l'invention, la partie active des embouts (12,13) présente une épaisseur inférieure à l'épaisseur des bras sur lesquels sont montés lesdits embouts, le décrochement reliant la partie de liaison à la partie active formant un arrondi dirigé vers la pointe (17,22) de l'embout.

FIG.7

## ECARTEUR PERFECTIONNE A COMMANDE HYDRAULIQUE

L'invention concerne un écarteur perfectionné à commande hydraulique, notamment pour effectuer des découpes en forme d'ouverture dans des tôles d'épaisseur appréciable.

Les écarteurs à commande hydraulique sont bien connus (voir par exemple documents US-A-4 333 330, US-A-3 816 874, DE-A-2 609 689 ou FR-A-2 372 686 et 2 623 738 de l'Inventeur). Pour l'essentiel, ces écarteurs comprennent essentiellement deux bras écarteurs articulés sur une chape, notamment par des biellettes et dont l'ouverture et la fermeture sont commandées par un vérin. Ces cisailles sont utilisés dans de nombreux domaines qu il n y a pas lieu de détailler.

Lorsque l'on désire faire des découpes dans des tôles d'épaisseur appréciable, telles que par exemple dans des carosseries d'un véhicule accidenté (automobile, car, train, avion...), on a déjà proposé d'utiliser ces écarteurs en fixant à l'extrémité de chacun des deux bras écarteurs un embout approprié respectivement d'appui et de découpe. Actuellement, ces embouts rapportés ont la même épaisseur que les bras écarteurs. La partie active de l'embout d'appui se termine par un crochet destiné à prendre appui sur la tôle, alors que la partie active de l'embout de découpe a une forme générale courbe destinée à former arête de découpe elle-même terminée par une pointe, de sorte qu'on détache dans la tôle des fentes ou des découpes qui s'enroulent en forme de copeaux au fur et à mesure que l'on écarte les bras de la cisaille. Bien que largement utilisée, cette technique présente encore de nombreux inconvénients. En effet, au fur et à mesure de l'écartement, les zones d'appui se déplacent le long des faces latérales des embouts jusqu'à remonter le long de l'extrémité des bras eux-mêmes. Il s'ensuit que l'on échappe alors à l'embout de découpe que l'on ne coupe plus ou mal. Les découpes réalisées de la sorte sont alors déchiquetées, ce qui présente de nombreux problèmes lorsque l'on veut pénétrer ou sortir des ouvertures pratiquées de la sorte.

L'invention pallie ces inconvénients. Elle vise un écarteur perfectionné du type en question qui permette de réaliser des découpes de plus grandes longueurs, plus franches, c'est-à-dire moins déchiquetées, et donc des ouvertures d'accès plus facile.

L'écarteur perfectionné conforme à l'invention est du type à commande hydraulique, comprenant deux bras écarteurs, articulés sur une chape, dont l'ouverture est commandée par un vérin et dont les deux extrémités libres reçoivent chacune un embout, respectivement d'appui et de découpe, constitués chacun de deux parties respectivement une partie active pour permettre de découper des ouvertures, et une partie de fixation à l'extrémité desdits bras écarteurs et il se <u>caractérise</u> en ce que :

- la partie active des embouts présente une épaisseur inférieure à l'épaisseur des bras sur lesquels sont montés lesdits embouts ;
- le décrochement reliant la partie de liaison à la partie active forme un arrondi dirigé vers la pointe de l'embout, ledit décrochement permettant un appui au fur et à mesure de l'écartement des bras.

En d'autres termes, l'invention consiste tout simplement à utiliser comme outils de découpe des embouts fixés à l'extrémité des bras écarteurs dont la largeur est inférieure à celle desdits bras écarteurs, de sorte que au fur et à mesure de l'écartement des bras, les embouts n'échappent pas, car la tôle vient en butée contre la portion de raccordement entre la partie active des embouts et l'extrémité des bras.

Avantageusement en pratique :
- les deux parties respectivement active et de découpe des deux embouts ont une épaisseur constante et sont reliées entre elles par un décrochement sensiblement vertical au plan d'articulation ;
- la partie active de l'embout de découpe présente une section trapézoïdale dont la plus grande base est dirigée vers l'extérieur ;
- la grande base est légèrement incurvée vers l'intérieur.

La manière dont l'invention peut être réalisée et les avantages qui en découlent ressortiront mieux de l'exemple de réalisation qui suit à l'appui des figures annexées.

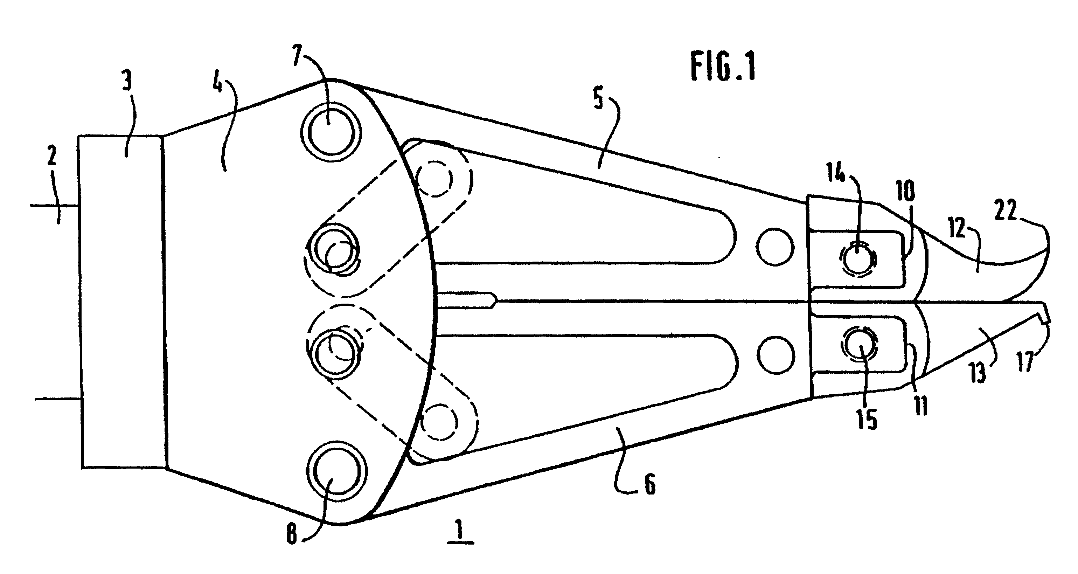

La figure 1 est une vue générale de dessus d'un écarteur conforme à l'invention.

Les figures 2 et 3 montrent respectivement vus de dessus les deux embouts caractéristiques de l'invention.

Les figures 4 et 5 montrent ces deux embouts vus de dessous.

La figure 6 est une vue en coupe de l'embout de découpe selon l'axe VI-VI (figures 3 et 5).

Les figures 7 e 8 sont respectivement des vues partielles en perspective et en coupe montrant plus en détail la manière dont fonctionne un écarteur conforme à l'invention.

L'écarteur selon l'invention désigné par la référence générale (1) comprend de manière connue un vérin (2) relié à la poignée de commande et au flexible hydraulique d'alimentation non représenté. Ce vérin est relié à une poignée de maintien (3) sur laquelle est montée la chape (4) sur laquelle sont articulés les deux bras écarteurs, respectivement (5) et (6) au moyen de biellettes (7) et (8). Chaque extrémité (10) et (11) des bras écarteurs présente des embouts respectivement (12) et (13) amovibles, reliés aux bras (10) et (11) par tout moyen approprié (14,15) tels que par exemple un axe passant à travers un logement prévu à cet effet.

Ces deux embouts peuvent être réalisés en toute matière appropriée, notamment en acier traité 35 NCD 16.

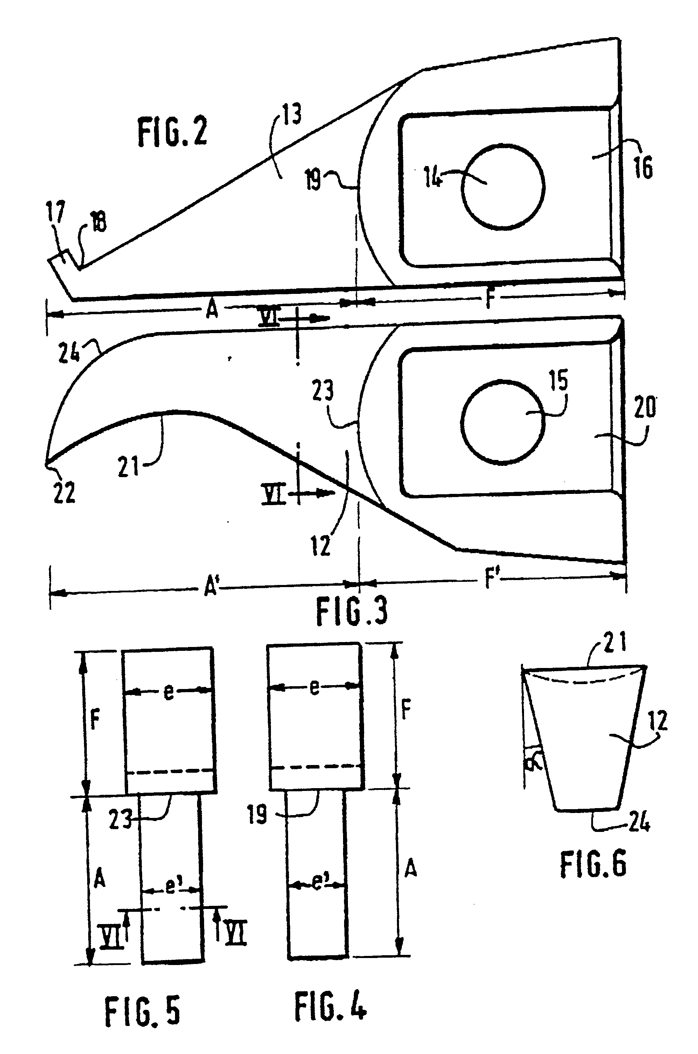

L'embout d'appui (13) comprend un logement (16) destiné à recevoir l'extrémité (11) du bras écarteur (6). Cet embout (13) présente à son extrémité libre un crochet (17) angulaire formant une zone d appui (18). Selon une première caractéristique de l'invention, la partie active de cet embout (13) désignée par la référence (A), à une largeur (voir figure 4) inférieure à celle de la partie de fixation (F) de l'embout sur le bras écarteur (6), dont l'épaisseur correspond à l'épaisseur (E) de cette partie active (A).

Dans une version avantageuse, la portion de raccordement (19) entre les deux portions respectivement active (A) et de fixation (F) est arrondie comme montré à la figure 2 pour permettre un appui au fur et à mesure de l'écartement des bras. De même, le raccordement entre la portion active (A) et la portion de fixation (F) s'effectue par une portion verticale au plan d'articulation.

L'embout de découpe désigné par la référence générale (12) et montré aux figures 3 et 5 présente de la même façon un logement (20) destiné à recevoir la pointe (10) du bras (5). La partie active (A') de cet outil a une forme générale courbe pour former une arête de découpe (21) qui se termine par une pointe (22). Là également, l'épaisseur (E,) de cette partie active (A') comme de la partie (A) est inférieure à l'épaisseur de la partie de fixation (F) ou (F') qui correspond à celle des bras écarteurs (5) et (6). La portion de raccordement (23) entre la partie active (A') et la partie de fixation (F') est également arrondie à l'instar de (19).

Les bords de la face interne (24) de la partie active (A') de l'embout de découpe (13) sont arrondis, alors que la section transversale selon l'axe VI-VI' (figures 3,5 et 6) présente une section légèrement trapézoïdale dont la grande base (21) est dirigée vers l'extérieur pour former arête de découpe. L'axe de dépouille alpha est de l'ordre de 5 à 10°. Dans une variante, la grande base est légèrement incurvée vers l'intérieur comme montré en pointillés sur la figure 6 pour faciliter l'enroulement du copeau. Par exemple, pour une largeur active (21) comprise entre 25 et 30 mm, on obtient de bons résultats avec une flèche de l'ordre de 2 à 3 mm.

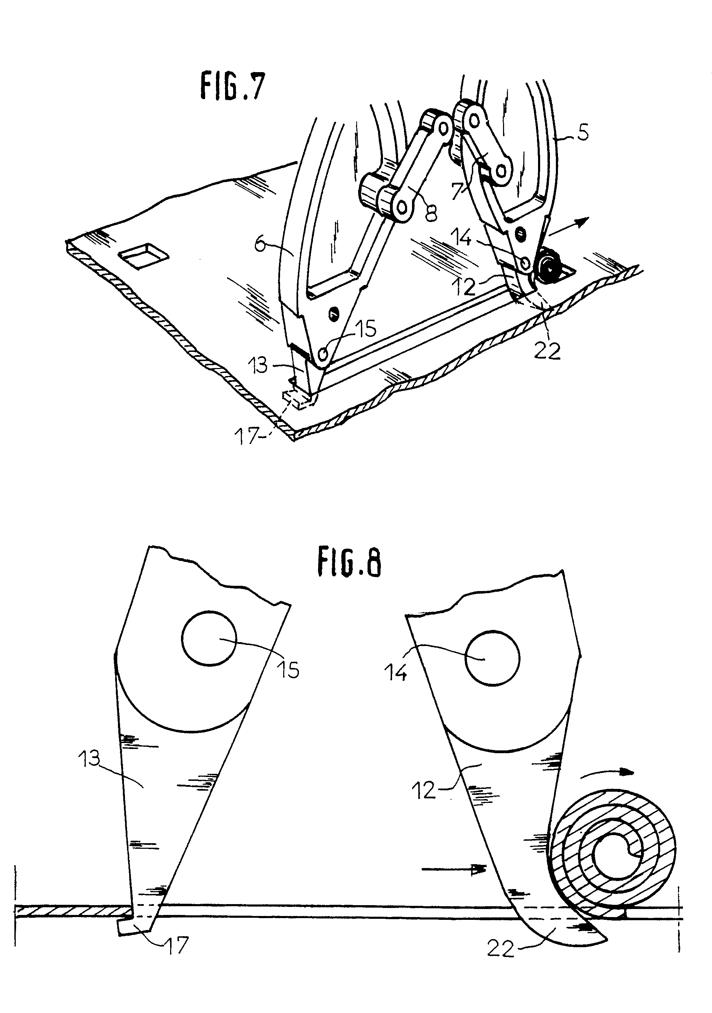

La manière dont l'écarteur conforme à l'invention est mis en oeuvre est illustrée plus particulièrement par les figures 7 et 8.

De manière connue, l'opérateur fait quatre trous aux angles de l'ouverture qu'il désire réaliser, notamment au marteau ou par tout moyen approprié.

Il agrandit ensuite de manière connue ces trous pour permettre l'introduction des embouts (11,12) respectivement (17, 22), les bras (5,6) étant repliés. L'opérateur effectue ensuite une première découpe en écartant le bras (6) dans la direction d'un trou opposé de manière à former une fente et en prenant soin toutefois de s'arrêter avant le trou opposé. Il effectue ensuite de la même manière, partie des trois autres côtés de l'ouverture toujours sans déboucher. Une fois ces quatre découpes réalisées, l'opérateur termine l'ouverture à la cisaille à lame droite. En opérant ainsi, on évite le déchiquetage des tôles qui, comme déjà dit, pose des problèmes lorsque l'on veut pénétrer ou sortir des personnes. Cela résulte probablement du fait que l'épaisseur des parties actives des embouts étant inférieure à celle des parties de fixation et des bras eux-mêmes, les tôles prennent appui sur les extrémités des arrondis (19,23) en les écartant au fur et à mesure et en évitant ainsi le déchiquetage.

## Revendications

1/ Ecarteur perfectionné à commande hydraulique, comprenant deux bras (5,6) écarteurs, articulés sur une chape (4), dont l'ouverture est commandée par un vérin (2), et dont les deux extrémités libres (10,11) reçoivent chacune un embout (12, 13), respectivement d'appui (13) et de découpe (12), constitués chacun de deux parties respectivement une partie active (A,A') pour permettre de découper des ouvertures, et une partie de fixation (F, F') à l'extrémité (10,11) desdits bras écarteurs (5,6), caractérisé en ce que :
- la partie active (A,A') des embouts (12,13) présente une épaisseur (E') inférieure à l'épaisseur (E) des bras (F,F',5,6) sur lesquels sont montés lesdits embouts (12,13) ;
- le décrochement (19,23) reliant la partie de liaison (F,F') à la partie active (A,A') forme un arrondi dirigé vers la pointe (17,22) de l'embout, ledit décrochement permettant un appui au fur et à mesure de l'écartement des bras.

2/ Ecarteur selon la revendication 1, caractérisé en ce que les deux parties respectivement active (A,A') et de fixation (F,F') des deux embouts (12,13) ont une épaisseur constante (E,E').

3/ Ecarteur selon l'une des revendications 1 et 2, caractérisé en ce que la partie active (A') de l'embout de découpe (12) présente une section trapézoïdale dont la plus grande base (21) est dirigée vers l'extérieur.

4/ Ecarteur selon la revendication 3, caractérisé en ce que la grande base (21) est légèrement incurvée vers l'intérieur.

FIG.1

**FIG.2**

**FIG.3**

**FIG.5**

**FIG.4**

**FIG.6**

FIG.7

FIG.8

**Office européen
des brevets**

**RAPPORT DE RECHERCHE
EUROPEENNE**

Numéro de la demande

**EP 90 42 0348**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | US-A-4 333 330 (PORTER)<br>* revendication 1; colonne 5, lignes 3-25; figures 1,2 *<br>– – – | 1 | B 25 B 27/02<br>B 23 D 29/00 |
| A | DE-B-2 319 276 (HURST)<br>* colonne 8, lignes 31-65; figures 4,5 *<br>– – – | 1 | |
| A | FR-A-2 350 853 (FRIESECKE & HOEPFNER)<br>* page 2; figure 1 *<br>– – – | 1 | |
| A | US-A-4 531 289 (BRICK)<br>* colonne 3, lignes 30-42; figures 1,2,6 *<br>– – – | 1 | |
| A | FR-A-2 503 000 (GALLEGO)<br>* revendications 1,3; figure 1 *<br>– – – | 1 | |
| A | DE-U-7 738 753 (MOELLER)<br>* page 18, lignes 1-7; figure 1 *<br>– – – | 1 | |
| D,A | FR-A-2 623 738 (AMGA)<br>* figure 1 *<br>– – – | 1 | **DOMAINES TECHNIQUES RECHERCHES (Int. Cl.5)** |
| D,A | DE-A-2 609 689 (DAIMLER-BENZ)<br>* figures 1,2 *<br>– – – – – | 1 | A 62 B<br>B 21 D<br>B 23 D<br>B 25 B |

Le présent rapport de recherche a été établi pour toutes les revendications

| Lieu de la recherche | Date d'achèvement de la recherche | Examinateur |
|---|---|---|
| Berlin | 22 octobre 90 | MARTIN A E W |